# EUROPÄISCHE PATENTANMELDUNG

(11) **EP 2 975 762 A1**
(43) Veröffentlichungstag der Anmeldung: **20.01.2016**
(21) Anmeldenummer: 15020118.4
(22) Anmeldetag: 13.07.2015
(51) Int. Cl.: H02S 40/44

(54) **ENERGIE-LEUCHTMITTEL KRAFTWERK**

(30) Priorität: 14.07.2014 DE 202014005769 U
(71) Anmelder: Kutzner-Panthen, Patrick, 10585 Berlin (DE); Gerlach, Thomas, 12053 Berlin (DE); Gerlach, Peter, 12053 Berlin (DE); Erding, Aktekin, 12347 Berlin (DE)
(72) Erfinder: Kutzner-Panthen, Patrick, 10585 Berlin (DE); Gerlach, Thomas, 12053 Berlin (DE); Gerlach, Peter, 12053 Berlin (DE); Erding, Aktekin, 12347 Berlin (DE)

(57) **Zusammenfassung**

Das **Energie-Leuchtmittel Kraftwerk (ELK)** ist dadurch gekennzeichnet das ein hochenergetisches Leuchtmittel (1) an einem Konzentrator (2) Photovoltaik (CPV) System (3), elektrische und thermische Energien erzeugt.

## Beschreibung

Die Erfindung betrifft ein Energie-Leuchtmittel Kraftwerk (ELK) dass zur Gewinnung von elektrischer und thermischer Energie genutzt wird.

Ein hochenergetisches Leuchtmittel (1) bestrahlt ein Spiegel (8) und oder ein LinsenSystem (2). Das Spiegel- Linsen- System bündelt den Lichtstrahl und versorgt eine CPV- Konzentratorzelle (3). Die CPV- Konzentratorzelle und der Spiegel (8) besitzen die Eigenschaft Lichtstrahlen in elektrischer und thermischer Energien zu wandeln. Diese Energien werden getrennt voneinander zur weiteren Nutzung abgeführt.

Die thermische Energie über einen Kühl- / Kreislaufsystem (4) im Wärmeaustauschverfahren zum Verbraucher geführt.

Die elektrische Energie wird über einen Spannung / Wechsehichter / Regelsystem (5) zum Verbraucher geführt.

Das Kühl- / Kreislaufsystem (4) hat zu einem die Funktion die in der CPV-Konzentratorzelle entstehende Temperatur in einer Betriebstemperatur zu erhalten und die überschüssige Wärme an einen Verbraucher abzugeben.

Das hochenergetische Leuchtmittel wird zusätzlich mit einem Ventilator - Lüftersystem (6) ausgestattet das die Betriebstemperatur regelt.

Die Anlageteile (1) / (4) / (5) / (6) werden über ein zentrales elektronische Steuerungssystem (7) überwacht und funktionell geregelt. Weiterhin besitzt diese zentrale Steuerung analoge und digitale Schnittstellen zu externen Kontroll- Anzeige und weiteren Steuerungsmöglichkeiten.

Das **Energie-Leuchtmittel Kraftwerk (ELK)** findet Verwendung als offenes System für den Einsatz individueller Art zur Strom und Wärmeversorgung.

Das **Energie-Leuchtmittel Kraftwerk (ELK)** in Verwendung als Kompakt- System für einen Einsatz in Haushalten zur Warmwasser Aufbereitung oder in ein bestehendes Heizungssystem über Wärmetauscher. Überall dort wo Wärme gebracht wird, kann das System sinnvoll eingesetzt werden. Zur Strom Gewinnung und für die elektrische Versorgung.

Das **Energie-Leuchtmittel Kraftwerk (ELK)** in Verwendung als Gebäudesystem für ein Haus oder Wohnblock.

Das **Energie-Leuchtmittel Kraftwerk (ELK)** findet Verwendung als Gebäudesystem für ein Haus oder Wohnblock, jedoch zusätzlich mit einem automatischen zugeschalteten double- System aus Spiegel-Linsensystem und CPV-Konzentratorzelle. Das double- System wird über Lichtsensoren der Sonne nach geführt, die Steuerung wird wahlweise automatisch oder manuell zugeschaltet.

### Das Energie-Leuchtmittel Kraftwerk (ELK) kann

mit einer kompakten entsprechender Elektronik zur Steuerung und Regulierung und in kleinere mobiler Bauweise auch in Fahrzeugen wie E-Mobile, Schienen Fahrzeuge o. ä. für jede Art von Antriebs Quellen - Energie, als Lieferant von thermischer und oder elektrische Energie, eingesetzt werden.

Das **Energie-Leuchtmittel Kraftwerk (ELK)** besteht aus mehreren folgenden Bauteilen:

### Bezugszeichen ( 1 ) - ( 8 )

(1) Hochenergetisches Leuchtmittel mit Vorschalt- Gerät - zum Beispiel ARC Xenon oder Sulphur Plasma Lampe Class AAA-Sonnen Simulator, die ein an die CPV / Konzentrator Zellen - Licht empfindliche Zellen angepasstes Spektrum Liefern. AM 1.0 / AM 1.5 o. ä.
(2) Linsen-Systeme mit Linsen Vorsätze, Vorzugsweise z. b. Fresnel- Linsen. Einzeln oder Gesamt zum Bündeln und konzentrieren des Lichtstrahls mit x facher Konzentration.
(3) CPV / Konzentrator Zellen - Licht empfindliche Zellen die von dem Künstlichen Leuchtmittel oder Natürlichen Licht bestrahlt werden. Und dadurch Energie erzeugen um diese zur weiteren Nutzung abzugeben.
(4) Kühl Kreislauf- Pumpe und Kühlmittel zum kühlen der Zellen und Erhaltung einer konstanten Betriebstemperatur und als Wärmetauscher zur Abgabe überschüssiger thermischer Energie.
(5) Spannungswandler/Wechsehichter zum anpassen an den örtlichen Energieverbraucher. Je nach Anforderung und Konzept zur Versorgung mit Gleichstrom oder Wechselstrom.
(6) Ventilatoren-Lüfter-System zum Kühlen der Betuebsteile.
(7) Zentrales Steuerungssystem zur Steuerung / Regelung der Bauteilen 1 - 6, sowie Vorschaltung von digitalen und analogen Schnittstellen für externe Überwachungssysteme und zu weiteren technischen Daten-/ Verarbeitungen und Auswertungen.
(8) Spiegel System - ( Gebogener Spiegel / Parabolspiegel / Cassegrain o.ä. )

Das **Energie-Leuchtmittel Kraftwerk (ELK)** kann je nach Baureihe oder Konzept in Verschiedenen Anordnungen Realisiert werden. ( Stationär- oder Mobilstationen ) Mit Linsen und Spiegel, oder auch ohne Linsen nur mit Spiegel Anordnung. Es werden Unterschiedliche Konzepte verfolgt und Umgesetzt.

Die Erfindung soll anhand der Zeichnungen ( 1 - 9 ) erläutert werden.

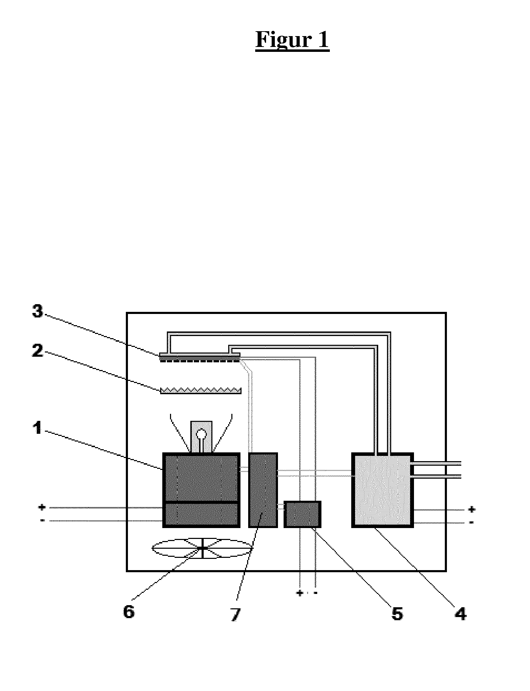

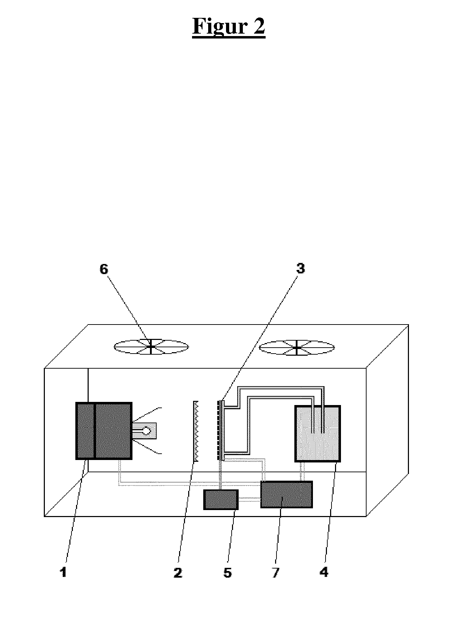

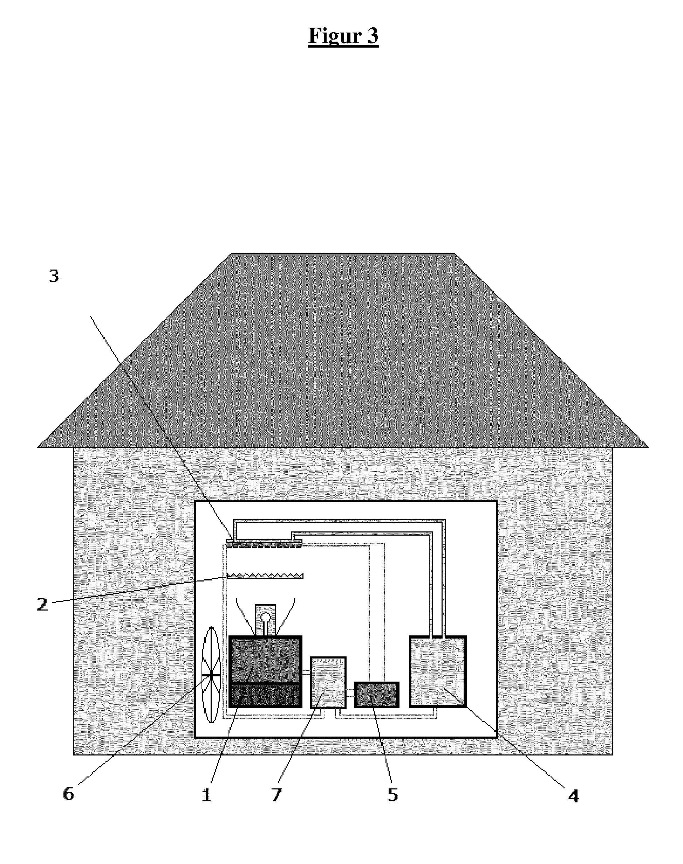

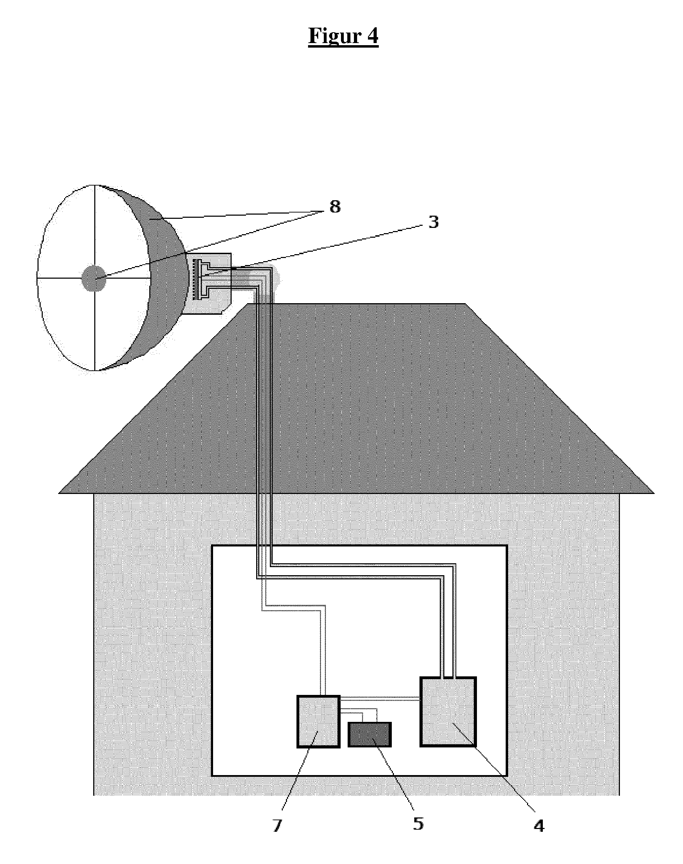

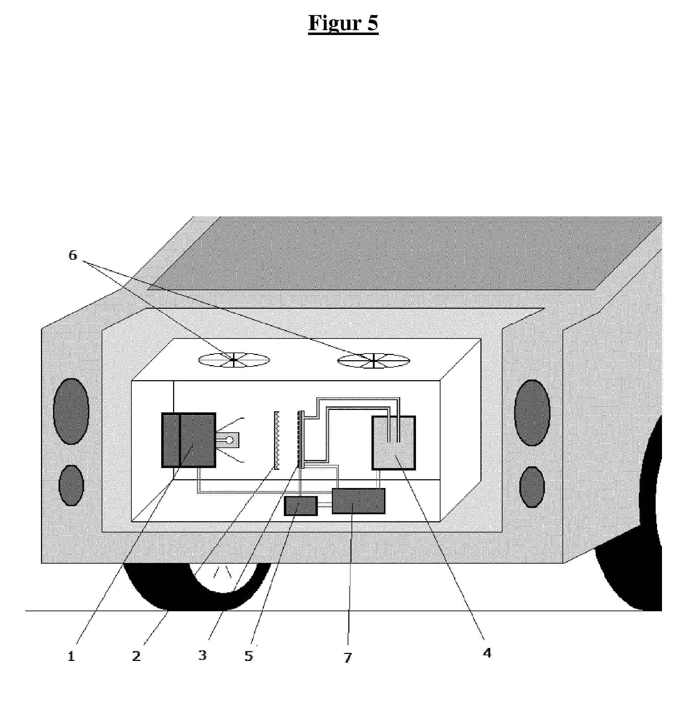

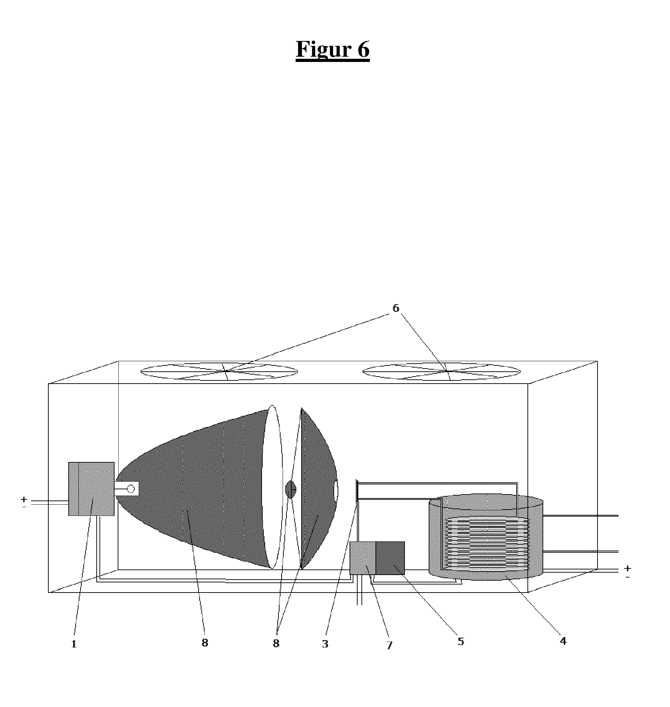

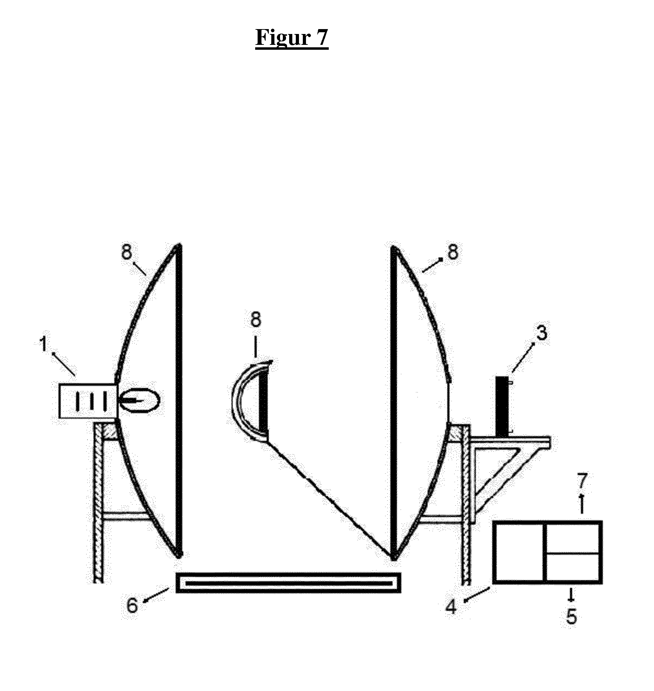

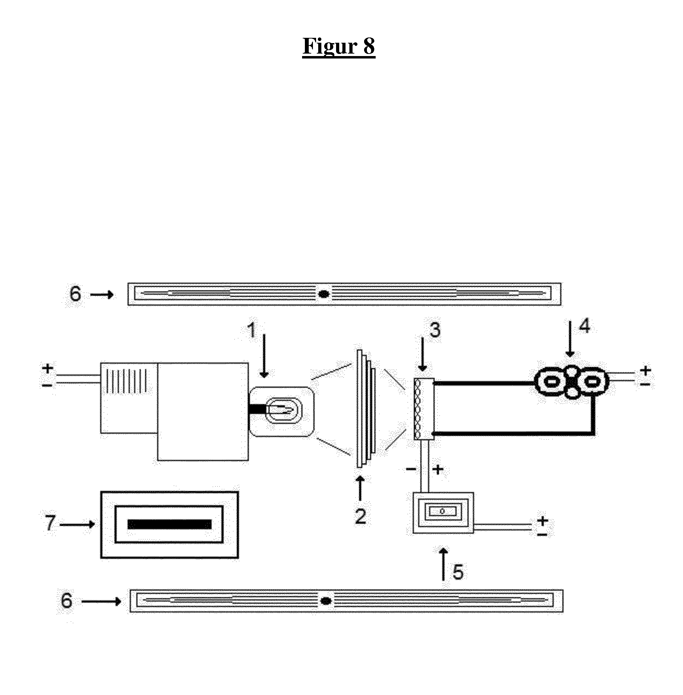

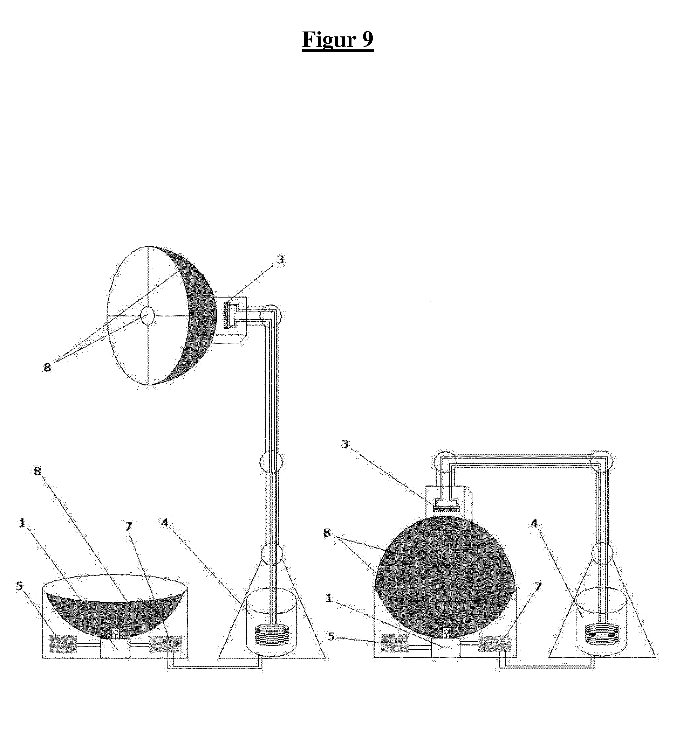

## Patentansprüche

1. Das **Energie-Leuchtmittel Kraftwerk (ELK)** ist **dadurch gekennzeichnet, dass** hochenergetische Leuchtmittel an einer CPV/Konzentrator Licht- empfindlichen Zellen angepasstes Spektrum, durch Sonnensimulation AM 1.0/AM 1.5 o. ä. Energie liefert.

2. Das **Energie-Leuchtmittel Kraftwerk (ELK)** ist **dadurch gekennzeichnet, dass** es über eine automatische Helligkeitssteuerung wahlweise künstliches oder natürliches Sonnenlicht an einer CPV/ Konzentrator Licht- empfindlichen Zellen angepasstes Spektrum (nach AM 1.0/AM 1.5 o. ä.) Energie liefert.

3. Das **Energie-Leuchtmittel Kraftwerk (ELK)** ist **dadurch gekennzeichnet, dass** das Licht über Linsen-Aufsätze oder Linsen-Vorsätze Einzeln oder Gesamt, zum bündeln und konzentrieren eine x-fache Lichtkonzentration, passend für eine zugeordneten Solar-Modul-Fläche, entsteht.

4. Das **Energie-Leuchtmittel Kraftwerk (ELK)** ist **dadurch gekennzeichnet, dass** CPV/Konzentrator Zellen-Licht empfindliche Zellen von dem künstlichem Leuchtmittel oder natürlichem Sonnenlicht bestrahlt werden und dadurch elektrische und thermische Energien erzeugen und diese zur weiteren Nutzung abgeben.

5. Das **Energie-Leuchtmittel Kraftwerk (ELK)** ist **dadurch gekennzeichnet, dass** es mit einem Kühl-Kreislauf-System zum kühlen der Zellen ausgestattet ist. Für den laufenden Betrieb regelt eine Elektronik eine konstante Temperatur.

6. Das **Energie-Leuchtmittel Kraftwerk (ELK)** ist **dadurch gekennzeichnet, dass** es in Haushalten als Stromenergie Erzeuger und/oder als Wärmeenergie Quelle eingesetzt werden kann, z.B. zur Warmwasser Aufbereitung und oder in ein vorhandenes Warmwasser - Heizungssystem-(Wärmetauscher) eingesetzt wird.

7. Das **Energie-Leuchtmittel Kraftwerk (ELK)** ist **dadurch gekennzeichnet, dass** es in Fahrzeugen wie E-Mobile, Schienen Fahrzeuge o. ä. eingebaut werden kann; und als Antriebsquelle-Energie Lieferant dient.

8. Das **Energie-Leuchtmittel Kraftwerk (ELK)** ist **dadurch gekennzeichnet, dass** die künstlichen Leuchtmittel, die Linsen und CPV/Konzentrator Zellen-Licht empfindliche Zellen, je nach Bauweise und Einsatzart in unterschiedlichen Versionen und Anordnungen als Stationär- oder Mobilstationen erstellt werden. Unterschiedliche Bauweisen können durch Licht-Umleitung über Spiegelsysteme den jeweiligen Einsatzort oder der Einsatzart angepasst werden.

9. Das **Energie-Leuchtmittel Kraftwerk (ELK)** ist **dadurch gekennzeichnet, dass** eine elektronische Spannungs- und Temperaturregelung den gesamten elektrischen und thermischen Energiengewinnungsprozess überwacht und über elektronische Sicherheitssysteme einen Überspannungsschutz, Notabschaltungen und Schnittstellen zu externen Überwachungs-/ Steuerungs- und Sicherheitssystemen gewährleistet.

10. Das **Energie-Leuchtmittel Kraftwerk (ELK)** ist **dadurch gekennzeichnet, dass** es in einem Gehäuse in einem Raum, Innen oder Außen- und oder als Inselanlage eingesetzt und Betrieben werden kann.

11. Das **Energie-Leuchtmittel Kraftwerk (ELK)** ist **dadurch gekennzeichnet, dass** es an unterschiedlichen elektrischen Energiesystemen (Spannungs-/Frequenz-Ausführungen) an Gleichstrom- oder Wechselstromsysteme angepasst und betrieben werden kann.
